# EUROPÄISCHE PATENTSCHRIFT

(11) **EP 2 098 547 B1**
(45) Veröffentlichungstag und Bekanntmachung des Hinweises auf die Patenterteilung: **20.07.2011**
(21) Anmeldenummer: 09002081.9
(22) Anmeldetag: 14.02.2009
(51) Int. Cl.: C08G 18/10, C08G 18/50, C08G 18/76

(54) **Präpolymere**
Prepolymers
Prépolymères

(30) Priorität: 27.02.2008 DE 102008011472
(43) Veröffentlichungstag der Anmeldung: 09.09.2009
(73) Patentinhaber: Bayer MaterialScience AG, 51368 Leverkusen (DE)
(72) Erfinder: Leimenstoll, Marc, Dr., 40721 Hilden (DE); Köhler, Burkhardt, Dr., 34289 Zierenberg (DE); Karafilidis, Christos, Dr., 40476 Düsseldorf (DE); Wintermantel, Matthias, Dr., 51465 Bergisch Gladbach (DE)

(56) Entgegenhaltungen:
- DE-A1- 2 436 740
- DE-A1- 10 110 437

## Beschreibung

Die Erfindung betrifft neue Präpolymere, die aus den Formamiden oligomerer Di- oder Polyamine (formamidterminerten Oligomeren) und Di- oder Polyisocyanaten zugänglich sind.

Isocyanatfunktionelle Präpolymere aus Polyolen und Polyisocyanaten sind seit langem bekannt und die Grundlage vieler existierender Handelsprodukte.

Für viele Anwendungen, insbesondere in den Bereichen Lacke und Klebstoffe sind Präpolymere mit einer niedrigen Viskosität wünschenswert.

Präpolymere aus Diisocyanaten und formamidterminierten Oligomeren sind neu und in der Literatur unbekannt.

Es wurde nun gefunden, dass aus formamidterminierten Oligomeren und Polyisocyanaten Acylharnstoff-Präpolymere zugänglich sind, die sich durch eine niedrige Viskosität auszeichnen.

Gegenstand der Erfindung sind daher Präpolymere aus Diisocyanaten und formamidterminierten Oligomeren.

Bevorzugt handelt es sich dabei um Präpolymere der allgemeinen Formel I

X-[-N(CHO)-CO-NH-R¹-NCO]ₙ (I)

wobei
X für einen n-valenten organischen Rest, vorzugsweise für einen Rest der Formel II,

Y-[-(CH₂-CHR³-(CH₂)ₚ-O)ₘ-CH₂-CHR⁴-(CH₂)ₒ-]ₙ - (II)

wobei
Y für einen n-funktionellen, gesättigten C2-C6-Rest
R¹ für einen C6-C13-Arylalkylrest oder einen C4-C13-Alkylenrest
R³ für Wasserstoff oder Methyl,
R⁴ für Wassertoff oder Methyl, vorzugsweise für Methyl, steht,
m für eine natürliche Zahl von 2 bis 30,
n für eine natürliche Zahl von 2 bis 4,
o für 0 oder 1, vorzugsweise für 0, und
p für 0, 1 oder 2, vorzugsweise für 0,
steht.

Ein weiterer Gegenstand der Erfindung ist ein Verfahren zur Herstellung der erfindungsgemäßen Präpolymere, dadurch gekennzeichnet, dass Diisocyanate mit einem formamidterminierten Oligomeren umgesetzt werden und der gegebenenfalls vorhandenen Überschuss an Diisocyanat durch Destillation abgetrennt wird.

Bevorzugt werden erfindungsgemäß n bis (n x 10) Mole an Diisocyanaten der Formel (III)

OCN-R¹-NCO (III),

wobei R¹ und n die oben angegebene Bedeutung haben,
mit einem Mol an formamidterminierten Oligomeren der Formel (IV)

X-[-NH(CHO)]ₙ (IV),

wobei X und n die oben angegebene Bedeutung haben,
umgesetzt werden, und der gegebenenfalls vorhandenen Überschuss an Diisocyanat durch Destillation abgetrennt wird.

Formamidterminierte Oligomere, insbesondere die formamidterminierten Oligomeren der Formel (IV), sind beispielsweise durch Reaktion von Ameisensäure-C1-C4-alkylestern mit Aminen der Formel (V) zugänglich,

X-[NH₂]ₙ (V),

wobei X und n die oben angegebene Bedeutung haben.

Die Umsetzung erfolgt vorzugsweise in einem Überschuss an AmeisensäureC1-C4-alkylester, vorzugsweise Methylformiat oder Ethylformiat, bei der Siedetemperatur des Ameisensäureesters, wobei nach erfolgter Reaktion der Amino- zur Formamidgruppe der Überschuss und der ebenfalls entstehende Alkylester, vorzugsweise Methanol oder Ethanol, abdestilliert wird. Möglich, aber nicht bevorzugt, ist die Umsetzung der Polyamine V zu den formamidterminierten Oligoenren IV mit Ameisensäure oder anderen Ameisensäurederivaten, wie Kohlenmonoxid, gemischten Ameisensäure-Carbonsäureanhydriden, niedermolekularen Amiden oder Aktivestern der Ameisensäure oder vorläufigen Reaktionsprodukten der Ameisensäure mit Amidkupplungsreagentien, wie Carbodiimiden oder kondensierten Phosphosäurederivaten. Ebenfalls möglich, aber nicht bevorzugt ist die Umsetzung von Formamid, beziehungsweise dem mit einer starken Base generierten Anion des Formamids mit Alkylierungsreagentien der Formel (VI)

X-[A]ₙ,

wobei X und n die oben angegebene Bedeutung haben und A für eine Abgangsgruppe, wie Chlorid, Bromid, Iodid, Mesylat, Tosylat oder Triflat steht.

Als Amine der Formel (V) werden vorzugsweise Polyetheramine der Fa. BASF oder Jeffamine der Fa. Huntsman eingesetzt. Es handelt sich um Polyethylenglykolen, Polyethylenglykole oder Polytetrahydrofurane, die vorzugsweise mit einer Gruppe der Struktur

-CH₂-CH(CH₃)-NH₂

oder

-CH₂-CH₂-CH₂-NH₂

aminofunktionalisiert sind.

Die Umsetzung der formamidterminierten Oligomeren mit den Isocyanaten erfolgt bei Temperaturen von 40 bis 120°C, in Gegenwart oder Anwesenheit, vorzugsweise in Abwesenheit von Katalysatoren, wie Zink- oder Zinnverbindungen. Das Diisocyanat wir d vorzugsweise in 3-8 fach molaren Menge bezogen auf das formamidterminierte Oligomer eingesetzt und der Überschuss durch Dünnschichtdestillation im Vakuum nach der Reaktion zum Acylharnstoff-Präpolyermen entfernt.

Erfindungsgemäß verwendete Diisocyanate sind z.B. 2,4-TDI, 2,6-TDI, 2,4'-MDI, 4,4'-MDI, 1,3-Diisocyanatobenzol, 1,4-Diisocyanatobenzol, HDI, IPDI, 4,4-Diisocyanatocyclohexylmethan, Bisisocyanatomethylnorbornan, Bisisocyanatomethylbenzol oder Bisisocyanatomethylcyclohexan.

Die erfindungsgemäßen Präpolymere sind in allen Bereichen anwendbar, wo auch die dem Stande der Technik entsprechenden Präpolymeren eingesetzt werden, wie Klebstoffe, Lacke, PUR-Form- oder Schaumkörper oder Dichtstoffe. Sie weisen dabei insbesondere den Vorteil einer niedrigeren Viskosität auf.

Geringe Viskositäten sind z.B. bei den Anwendungen "Flexible Packaging" oder "reaktive Polyurethan Schmelzklebstoffe" (Hotmelts) von besonderem Vorteil. Unter Flexible Packaging wird hierbei die Herstellung von Folienverbunden durch Verkleben mit einem auf Polyurethan basierten Klebstoff verstanden. Der Klebstoff wird hierbei typischerweise in flüssiger Form auf ein Folie aufgetragen und direkt danach mit einer zweiten Folie gefügt. Unter reaktiven Polyurethan Schmelzklebstoffen werden Klebstoffsysteme verstanden, welche bei erhöhten Temperaturen in Form einer Schmelze vorliegen und bei diesen Temperaturen flüssig appliziert werden. Nach Applikation und Fügen kühlt der noch reaktive Klebstoff ab und baut dabei rapide Anfangsfestigkeit auf. Die Endfestigkeit wird nach vollständiger Aushärtung mit Luftfeuchtigkeit erreicht.

### Beispiele:

Verwendete Ausgangsstoffe:
   Desmodur^{®} T80 (Bayer MaterialScience AG, Leverkusen, DE), eine 80:20-Mischung aus 2,4- und 2,6-TDI,
   Desmophen^{®} 1262 BD (Bayer MaterialScience AG, Leverkusen, DE), ein difunktioneles Polypropylenoxid der Molmasse Mₙ = 400,
   Jeffamin^{®} ED600 (Huntsman, UK), ein difunktionelles, aminoterminiertes Poly-ethylenco-propylen-glykol der Molmasse Mₙ = 600,
   Jeffamin^{®} D400 (Huntsman, UK), ein difunktionelles, aminoterminiertes Polypropylenglykol der Molmasse Mₙ = 400 und
   Irganox^{®} 1076 (Ciba, CH), ein sterisch gehindertes Phenol.

### Beispiel 1

Man tropft bei 25°C zu 400g Jeffamin^{®} ED600 innerhalb von 4h 400g Ameisensäureethylester und lässt 4h nachrühren. Dann werden der überschüssige Ameisensäureethylester und das gebildete Ethanol abdestilliert. Das gebildete formamidterminierte Oligomer wird bei 80°C innerhalb von 2h zu 2088g Desmodur^{®} T80, 1g Irganox^{®} 1076 und 2g Benzoylchlorid getropft bei 80°C und 8h nachgerührt. Anschließend erfolgt eine Abtrennung des überschüssigen Desmodur^{®} T80 in einer Dünnschicht-Destillation bei 130°C.

Man erhält ein Acylharnstoff-Präpolymer mit einem NCO-Gehalt von 9,2% und Viskositäten wie in Tabelle 1 dargestellt.

### Beispiel 2

Man tropft bei 25°C zu 400g Jeffamin^{®} D400 innerhalb von 4h 400g Ameisensäureethylester und lässt 4h nachrühren. Dann werden der überschüssige Ameisensäureethylester und das gebildete Ethanol abdestilliert. Das gebildete formamidterminierte Oligomer wird bei 80°C innerhalb von 2h zu 2088g Desmodur^{®} T80 und 2g Benzoylchlorid getropft bei 80°C und 8h nachgerührt. Anschließend erfolgt eine Abtrennung des überschüssigen Desmodur^{®} T80 in einer Dünnschicht-Destillation bei 130°C.

Man erhält ein Acylharnstoff-Präpolymer mit einem NCO-Gehalt von 10,4% und Viskositäten wie in Tabelle 1 dargestellt.

### Vergleichsbeispiel

Man tropft bei 80°C 265,98g Desmophen^{®} 1262 BD innerhalb von 2h zu 535,02g Desmodur^{®} T80 und lässt 8h nachrühren. Anschließend erfolgt eine Abtrennung des überschüssigen Desmodur^{®} T80 durch Dünnschicht-Destillation bei 130°C.

Man erhält ein Acylharnstoff-Präpolymer mit einem NCO-Gehalt von 10,4% und Viskositäten wie in Tabelle 1 dargestellt.

**Tabelle 1: Viskositäten der Beispiele 1 und 2 und des Vergleichsbeispiels bei unterschiedlichen Temperaturen**

| | Viskosität in mPas | | |
|---|---|---|---|
| bei °C | Beispiel 1 | Beispiel 2 | Vergleichsbeispiel |
| 25 | 17357 | 206280 | Nicht messbar |
| 50 | 1378 | 5403 | 16800 |
| 75 | 275 | 571 | 1410 |
| 100 | 92 | 132 | 898 |

## Patentansprüche

1. Präpolymere aus Diisocyanaten und formamidterminierten Oligomeren.

2. Präpolymere gemäß Anspruch 1 der allgemeinen Formel I
X-[-N(CHO)-CO-NH-R¹-NCO]ₙ (I)
in welcher
X für einen n-valenten organischen Rest, vorzugsweise für einen Rest der Formel II,
Y-[-(CH₂-CHR³-(CH₂)p-O)ₘ-CH₂-CHR⁴-(CH₂)ₒ-]ₙ - (II)
in welcher
Y für einen n-funktionellen, gesättigten C2-C6-Rest
R¹ für einen C6-C13-Arylalkylrest oder einen C4-C13-Alkylenrest
R³ für Wasserstoff oder Methyl,
R⁴ für Wassertoff oder Methyl steht,
m für eine natürliche Zahl von 2 bis 30,
n für eine natürliche Zahl von 2 bis 4,
o für 0 oder 1,
p für 0, 1 oder 2, und
steht.

3. Präpolymere der allgemeinen Formel I gemäß Anspruch 1,
X-[-N(CHO)-CO-NH-R¹-NCO]ₙ (I)
in welcher
X für einen n-valenten organischen Rest, vorzugsweise für einen Rest der Formel II,
Y-[-(CH₂-CHR³-(CH₂)ₚO)ₘ-CH₂-CHR⁴-(CH₂)ₒ-]ₙ- (II)
wobei
Y für einen n-funktionellen, gesättigten C2-C6-Rest
R¹ für einen C6-C13-Arylalkylrest oder einen C4-C13-Alkylenrest
R³ für Wasserstoff oder Methyl,
R⁴ für Methyl steht,
m für eine natürliche Zahl von 2 bis 30,
n für eine natürliche Zahl von 2 bis 4,
o für 0 und
p für 0
steht.

4. Verfahren zur Herstellung von Präpolymeren gemäß Anspruch 1, **dadurch gekennzeichnet, dass** Diisocyanate mit einem formamidterminierten Oligomeren umgesetzt werden und der gegebenenfalls vorhandenen Überschuss an Diisocyanat durch Destillation abgetrennt wird.

5. Verfahren zur Herstellung von Präpolymeren der Formel (I) gemäß Ansprüchen 2 bis 3,
**dadurch gekennzeichnet, dass**
n bis (n x 10) Mole an Diisocyanaten der Formel (III)
OCN-R¹-NCO (III),
wobei R¹ und n die in Anspruch 1 angegebene Bedeutung haben,
mit einem Mol an formamidterminierten Oligomeren der Formel (IV)
X-[-NH(CHO)]ₙ (IV),
wobei X und n die in Anspruch 1 angegebene Bedeutung haben,
umgesetzt werden, und der gegebenenfalls vorhandenen Überschuss an Diisocyanat durch Destillation abgetrennt wird.

6. Verwendung von Präpolymeren gemäß Ansprüchen 1 bis 3 zur Herstellung von Klebstoffen.

7. Verwendung von Präpolymeren gemäß Ansprüchen 1 bis 3 zur Herstellung von Lacken.

8. Verwendung von Präpolymeren gemäß Ansprüchen 1 bis 3 zur Herstellung von PUR-Form- oder Schaumkörpern.

9. Verwendung von Präpolymeren gemäß Ansprüchen 1 bis 3 zur Herstellung von Dichtstoffen.

10. Präpolymere gemäß Ansprüchen 1 bis 3 enthaltende Klebstoffe.

11. Präpolymere gemäß Ansprüchen 1 bis 3 enthaltende Dichtstoffe.

12. Präpolymere gemäß Ansprüchen 1 bis 3 enthaltende Lacke.

## Claims

1. Prepolymers formed from diisocyanates and formamide-terminated oligomers.

2. Prepolymers according to Claim 1, of the general formula I
X-[-N(CHO)-CO-NH-R¹-NCO]ₙ (I)
in which
X is an n-valent organic radical, preferably a radical of the formula II,
Y- [-(CH₂-CHR³-(CH₂)ₚ-O)ₘ-CH₂-CHR⁴-(CH₂)ₒ-]ₙ- (II)
in which
Y is an n-functional, saturated C2-C6 radical,
R¹ is a C6-C13 arylalkyl radical or a C4-C13 alkylene radical,
R³ is hydrogen or methyl,
R⁴ is hydrogen or methyl,
m is a natural number from 2 to 30,
n is a natural number from 2 to 4,
o is 0 or 1, and
p is 0, 1 or 2.

3. Prepolymers of the general formula I according to Claim 1,
X- [-N(CHO)-CO-NH-R¹-NCO]ₙ (I)
in which
X is an n-valent organic radical, preferably a radical of formula II,
Y- [- (CH₂-CHR³- (CH₂)ₚ-O)ₘ-CH₂-CHR⁴- (CH₂)ₒ-]ₙ- (II)
where
Y is an n-functional, saturated C2-C6 radical,
R¹ is a C6-C13 arylalkyl radical or a C4-C13 alkylene radical,
R³ is hydrogen or methyl,
R⁴ is methyl,
m is a natural number from 2 to 30,
n is a natural number from 2 to 4,
o is 0, and
p is 0.

4. Process for preparing prepolymers according to Claim 1, **characterized in that** diisocyanates are reacted with a formamide-terminated oligomer and any excess of diisocyanate is removed by distillation.

5. Process for preparing prepolymers of the formula (I) according to Claims 2 and 3,
**characterized in that**
n to (n x 10) moles of diisocyanates of formula (III)
OCN-R¹-NCO (III),
where R¹ and n have the definition indicated in Claim 1,
are reacted with one mole of formamide-terminated oligomers of the formula (IV)
X-[-NH(CHO)]ₙ (IV),
where X and n have the definition indicated in Claim 1,
and any excess of diisocyanate is removed by distillation.

6. Use of prepolymers according to Claims 1 to 3 for producing adhesives.

7. Use of prepolymers according to Claims 1 to 3 for producing coating materials.

8. Use of prepolymers according to Claims 1 to 3 for producing PU mouldings or foam articles.

9. Use of prepolymers according to Claims 1 to 3 for producing sealants.

10. Adhesives comprising prepolymers according to Claims 1 to 3.

11. Sealants comprising prepolymers according to Claims 1 to 3.

12. Coating materials comprising prepolymers according to Claims 1 to 3.

## Revendications

1. Prépolymères composés de diisocyanates et d'oligomères à terminaison formamide.

2. Prépolymères selon la revendication 1 de la formule générale I
X- [-N(CHO)-CO-NH-R¹-NCO]ₙ (I)
dans laquelle
X représente un radical organique n-valent, de préférence un radical de la formule II
Y- [-(CH₂-CHR³-(CH₂)ₚ-O)ₘ-CH₂-CHR⁴-(CH₂)ₒ-]ₙ- (II)
dans laquelle
Y est un radical C₂-C₆ saturé n-fonctionnel R¹ est un radical arylalkyle C₆-C₁₃ ou un radical alkylène C₄-C₁₃
R³ est l'hydrogène ou méthyle
R⁴ est l'hydrogène ou méthyle
m est un nombre entier naturel de 2 à 30
n est un nombre entier naturel de 2 à 4
o est égal à 0 ou 1
p est égal à 0, 1 ou 2.

3. Prépolymères de la formule générale I selon la revendication 1,
X- [-N(CHO)-CO-NH-R¹-NCO]ₙ (I)
dans laquelle
X représente un radical organique n-valent, de préférence un radical de la formule II
Y- [- (CH₂-CHR³- (CH₂)p-O)ₘ-CH₂-CHR⁴- (CH₂)ₒ-]ₙ- (II)
dans laquelle
Y est un radical C₂-C₆ saturé n-fonctionnel R¹ est un radical arylalkyle C₆-C₁₃ ou un radical alkylène C₄-C₁₃
R³ est l'hydrogène ou méthyle
R⁴ est méthyle
m est un nombre entier naturel de 2 à 30
n est un nombre entier naturel de 2 à 4
o est égal à 0 et
p est égal à 0.

4. Procédé de fabrication de prépolymères selon la revendication 1, **caractérisé en ce que** l'on convertit des diisocyanates avec des oligomères à terminaison formamide et on sépare l'excédent éventuellement présent de diisocyanate par distillation.

5. Procédé de fabrication de prépolymères de la formule (I) selon les revendications 2 à 3, **caractérisé en ce que** l'on convertit
n à (n x 10) moles de diisocyanate de la formule (III)
OCN-R¹-NCO (III)
dans laquelle R¹ et n ont la signification indiquée dans la revendication 1
avec une mole d'oligomères à terminaison formamide de la formule (IV)
X-[-NH(CHO)]ₙ (IV)
dans laquelle X et n ont la signification indiquée dans la revendication 1, et on sépare l'excédent éventuellement présent de diisocyanate par distillation.

6. Utilisation de prépolymères selon les revendications 1 à 3 pour la fabrication de colles.

7. Utilisation de prépolymères selon les revendications 1 à 3 pour la fabrication de laques.

8. Utilisation de prépolymères selon les revendications 1 à 3 pour la fabrication de corps de PU moulés ou expansés.

9. Utilisation de prépolymères selon les revendications 1 à 3 pour la fabrication de matériaux d'étanchéité.

10. Colles contenant des prépolymères selon les revendications 1 à 3.

11. Matériaux d'étanchéité contenant des prépolymères selon les revendications 1 à 3.

12. Laques contenant des prépolymères selon les revendications 1 à 3.
